Europäisches Patentamt

European Patent Office

Office européen des brevets

(19)

(11) Veröffentlichungsnummer : **0 344 120 B1**

## (12) EUROPÄISCHE PATENTSCHRIFT

(45) Veröffentlichungstag der Patentschrift :
15.01.92 Patentblatt 92/03

(21) Anmeldenummer : **89810379.1**

(22) Anmeldetag : **22.05.89**

(51) Int. Cl.⁵ : **F16B 12/46,** F16B 12/14, F16B 12/26

(54) Verbindungselement für den Aufbau von Möbeln und damit realisiertes Möbel.

(30) Priorität : **24.05.88 CH 1964/88**

(43) Veröffentlichungstag der Anmeldung :
**29.11.89 Patentblatt 89/48**

(45) Bekanntmachung des Hinweises auf die Patenterteilung :
**15.01.92 Patentblatt 92/03**

(84) Benannte Vertragsstaaten :
**AT BE CH DE ES FR GB GR IT LI LU NL SE**

(56) Entgegenhaltungen :
**DE-A- 1 801 507**
**DE-A- 2 933 712**
**DE-C- 740 659**
**FR-A- 1 317 529**

(73) Patentinhaber : **GEHRI INNENAUSBAU AG**
**Seidengasse 7**
**CH-3270 Aarberg (CH)**

(72) Erfinder : **Gehri, Ernst**
**Seidengasse 7**
**CH-3270 Aarberg (CH)**

(74) Vertreter : **Gasser, François W.**
**Patentanwalt und Lizenzberater,**
**Reiterstrasse 5A**
**CH-3013 Bern (CH)**

EP 0 344 120 B1

## Beschreibung

Die vorliegende Erfindung betrifft einerseits ein Verbindungselement für den Aufbau von Möbeln gemäss dem Oberbegriff des Patentanspruchs 1 und andererseits ein unter Verwendung dieses Verbindungselementes realisiertes Möbel gemäss dem Oberbegriff des Patentanspruches 5.

Für den Aufbau von zerstörungsfrei wieder zerlegbaren Möbeln, insbesondere unter Verwendung von Normbauteilen, werden diverse Verbindungselemente für die Normbauteile verwendet. Eines der wohl bekanntesten ist die sogenannte "USM-Kugel", mittels welcher Rohre zu einem Möbelskelett verbindbar sind, in welches Möbelskelett Aussen- und Trennwände sowie u.a. Boden- und Deckenteile und Schubladen, etc. einbaubar sind. Auch gewöhnliche Winkel und ähnliche Teile, die mit den aneinandergrenzenden Wand-, Decken- und Bodenteilen der Möbel verschraubt oder sonstwie verbunden werden, werden verwendet. Bekannt sind auch Holz- und andere Dübel in runder oder ovaler Form, die sich allerdings nicht für den Aufbau von zerstörungsfrei wieder zerlegbare Möbel eignen, da sie mit den Holz- oder Spanplattenteilen der aneinanderstossenden Möbelplanken verleimt werden müssen und lediglich als Verstärkungen dienen. Weiter sind in die Holz- oder Spanplatteile der Möbelplanken einsetzbare und durch seitliche Oeffnungen bedienbare Verbinder in Form von verschiebbaren Stiften bekannt.

Insbesondere die herkömmlichen Winkel und Dübel weisen gewichtige Nachteile auf. Erstere, da sie in der Regel nicht unsichtbar montiert werden können und Schraubenlöcher hinterlassen, wenn das Möbel zerlegt werden muss. Letztere, weil sie, wie erwähnt, kein zerstörungsfreies Zerlegen der einmal zusammengebauten Möbel ermöglichen. Auch die in die Holz- oder Spanplatten einsetzbaren Verbinder weisen Nachteile auf, insbesondere, da sie relativ grosse minimale Materialstärken voraussetzen um überhaupt angewendet werden zu können. Aber auch die sehr weitverbreiteten sogenannten "USM-Kugeln", die mit mehreren gegen ihr Zentrum hin gerichteten Gewindebohrungen versehen sind, in die in den Rohren verkeilbar montierte Schraubenbolzen einschraubbar sind, sind nicht in allen Fällen verwendbar. Sie werden auch vorwiegend für Stahl- oder Metallmöbelkonstruktionen im Bürobereich eingesetzt.

Aus der DE-A-2933712 ist ein würfelförmiges Eckverbindungsstück für Möbel bekannt, das Ähnlichkeiten mit der vorgenannten "USM-Kugel" aufweist und der Verbindung von drei jeweils in einem rechten Winkel zueinander stehenden Stäben dient. Da das Verbinden des Eckverbindungsstückes mit jedem Stab aber nur erfolgen kann, wenn von der dem Stab gegenüberliegenden Würfelseite her durch diesen hindurch eine Schraube in den Stab eingeschraubt kann, ist dieses bekannte Eckverbindungsstück nur in Möbelecken einsetzbar und somit in seinen Anwendungsmöglichkeiten eingeschränkt.

Aus der DE-A-1801507 ist ein Verbindungselement für den Aufbau von Möbeln bekannt, das ein zentrales mit ein oder mehreren Gewindebohrungen versehenes würfelförmiges Montageteil und zumindest ein in ein Möbelteil einsetzbares hülsenförmiges Halteteil sowie zumindest ein in eine der Gewindebohrungen einschraubbares bolzenförmiges Verbindungsteil umfasst, wobei letzteres dazu dient, den Montageteil mit dem im Möbelteil eingesetzten Halteteil zu verbinden. Dieses Verbindungselement weist den Nachteil auf, dass die einzelnen Möbelteile lediglich zusammengesteckt und nicht zusammengeschraubt werden können, was dem ganzen Möbel eine für viele Anwendungen ungenügende Stabilität gibt.

Der vorliegenden Erfindung liegt einerseits die Aufgabe zugrunde, ein neues, vorteilhaftes Verbindungselement der eingangs beschriebenen Art vorzuschlagen, das sich insbesondere für den Aufbau von Holz- oder Spanplattenmöbeln als auch für Möbel aus anderen Grundstoffen eignet und das das zerstörungsfreie nachträgliche Demontieren der Möbel ermöglicht. Das neue Verbindungselement soll keine der Einschränkungen und/oder Nachteile der bekannten Möbelverbinder aufweisen und einfach anwendbar sein. Andererseits soll die Erfindung zu einem unter Verwendung des Verbindungselementes realisierten Möbel führen, das eine eigene Aesthetik aufweist und sich klar von jenen Möbeln abhebt, die unter Verwendung der bekannten Möbelverbindungselemente realisiert wurden.

Erfindungsgemäss wird diese Aufgabe einerseits durch ein Verbindungselement für Möbel gelöst, wie es im Patentanspruch 1 definiert ist. Andererseits durch ein Möbel, wie es im Patentanspruch 5 umschrieben ist.

Im Folgenden wird die Erfindung anhand der Zeichnung in zwei vorteilhaften Ausführungsvarianten im Detail beschrieben. In der Zeichnung zeigt

Fig. 1 ein Ausführungsbeispiel unter vielen eines erfindungsgemässen Möbels aus Holz in parallelperspektivischer Sicht, das unter Verwendung erfindungsgemässer Verbindungselemente zusammengebaut worden ist,

Fig. 2 das Eckendetail II in Fig. 1 dieses Möbels in vergrössertem Masstab,

Fig. 3 das Eckendetail III aus Fig. 1 im Schnitt durch das erfindungsgemässe Verbindungselement in seiner ersten Ausführungsvariante und zwei daran anschliessende Möbelteile,

Fig. 3a und 3b konstruktive Einzelheiten zur korrekten Positionierung einer Komponente der ersten Ausführungsvariante des Verbindungselementes entlang der Linie III a,b-III a,b,

Fig. 4 das in der Ecke II, III des Möbels gemäss Fig. 1 verwendete erfindungsgemässe Verbindungselement in seiner ersten Ausführungsvariante mit den daran anschliessenden Möbelteilen in perspektivischer Explosion, zwecks Darstellung der Einzelteile des Verbindungselementes,

Fig. 5 bis 8 diverse Schritte beim Zusammenbau eines erfindungsgemässen Verbindungselementes mit einem daran anschliessenden Möbelteil, und

Fig. 9, 9a und 9b einen Schnitt durch die zweite Ausführungsvariante des Verbindungselementes sowie dessen konstruktive Details zwecks Positionierung einer seiner Komponenten.

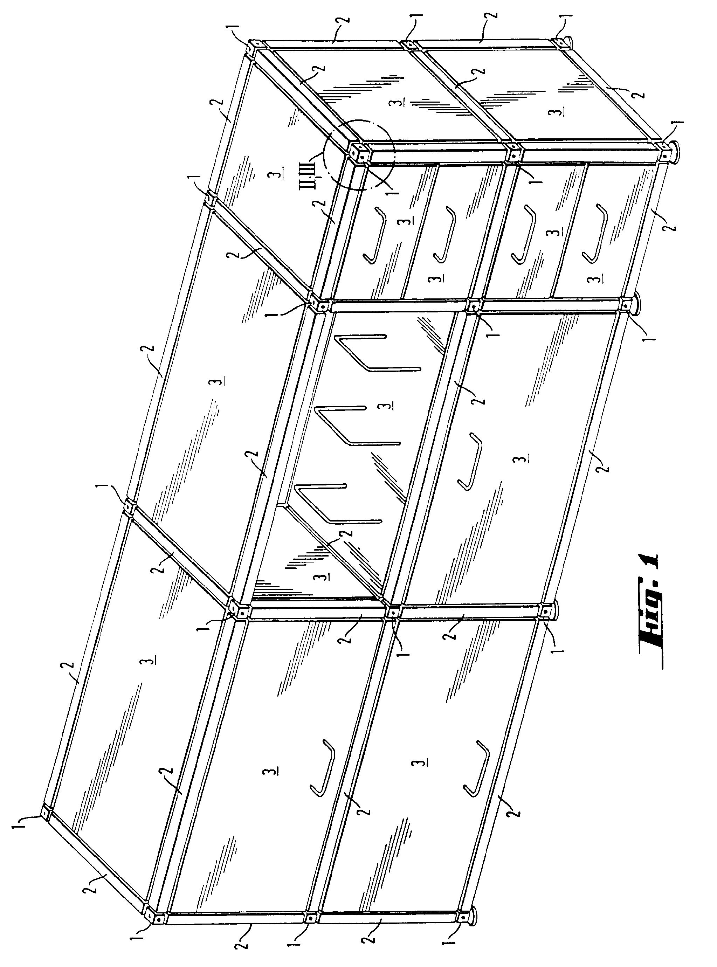

Die Fig. 1 illustriert eine Möbelvariante unter vielen eines erfindungsgemässen Möbels aus Holz, das unter Verwendung von vierundzwanzig erfindungsgemässen Verbindungselementen 1, sechsundvierzig Möbelkantenhölzern 2 und siebenundzwanzig Flächenteilen 3 in Form von Front-, Seiten-, Rückwand-, Deck-, Boden-, Trenn-, Schubladen- und Tablarteilen, zusammengebaut worden ist. Der Fachmann erkennt leicht, dass entsprechend andere Möbelvarianten aufbaubar sind, je nach dem, wie viele Verbindungselemente 1, Möbelkantenhölzer 2 und Flächenteile 3 verwendet werden und wie letztere im Einzelfall ausgebildet sind. Neben den hier dargestellten zwei Würfeln und vier Kuben als Grundelement des Möbels und den eben, resp. als Schubladen, Klappdeckel und Büchergestellboden ausgebildeten Ausführungsvarianten der Flächenteile 3 können beliebige andere Flächenteile 3 zwischen die zu einem Möbelskelett verbundenen Möbelkantenhölzer 2 eingesetzt sein. Je nach Bestimmungszweck des aufzubauenden Möbels können dabei die Möbelkantenhölzer 2 ein-, zwei-, drei- oder vierseitig mit hier nicht dargestellten und nicht zum Erfindungsgegenstand gehörigen Längsnuten versehen sein, in die Federn der Flächenteile 3 zwecks Positionierung derselben eingreifen können. Alternativ können die Möbelkantenhölzer 2 aber auch mit Bohrungen versehen sein, in die Stifte der Flächenteile 3 zwecks Positionierung und Fixierung derselben, steckbar sind. Die Möbelkantenhölzer 2 können auch ein- oder mehrseitig furniert sein, insbesondere an jenen Längsseiten, die beim fertigen Möbel ganz oder teilweise sichtbar sind. Es ist vorteilhaft, wenn die Möbelkantenhölzer 2 aus massivem Hartholz, gegebenenfalls Metall oder Kunststoff bestehen, um die auf sie einwirkenden Kräfte aufnehmen und die sich ergebenden Belastungen schadlos ertragen zu können. Die Flächenteile 3 können aus Holz-, Span-, Metall- oder Kunststoffplatten bestehen und wie hiervor erwähnt eben oder strukturiert, z.B. in Form von Schubladen, ausgebildet sein. Es können aber auch Glasscheiben, verschliessbare Möbeltüren, etc. als Flächenteile in das aus den Möbelkantenhölzern 2 gebildete Möbelskelett eingebaut werden.

Ein derart aufzubauendes erfindungsgemässes Möbel kann selbstverständlich mehr als die hier dargestellten zwei Würfel und vier Kuben umfassen. Sowohl in der Höhe als auch in der Länge und Tiefe kann das Möbel unterschiedliche Masse aufweisen. Bei Bedarf kann es sogar als Eckmöbel ausgebildet werden und unvollständige Würfel und Kuben umfassen. Die einzelnen Würfel und Kuben können dabei entweder ein vorgegebenes Rastermass aufweisen oder je auf Mass gefertigt werden.

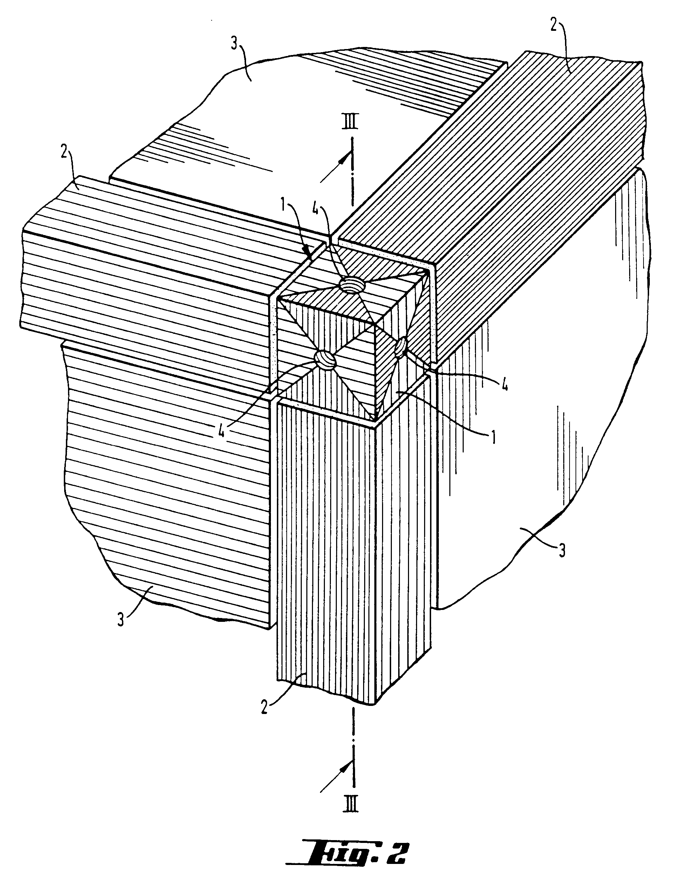

In Fig. 2 ist das Detail der Ecke II des Möbels gemäss Fig. 1 in grösserem Masstab, ebenfalls in parallelperspektivischer Sicht, dargestellt. Man erkennt aus dieser Darstellung des erfindungsgemässen Verbindungselementes 1, dass dieses von aussen betrachtet im wesentlichen aus einem Würfel 1' mit bis zu sechs Gewindebohrungen 4, je eine zentral auf jeder Würfelseite angeordnet, besteht, an welchen Würfel 1' sich ebenfalls bis zu sechs Möbelkantenhölzer 2 anschliessen können. Bei holzfurnierten oder holzähnlich furnierten Möbeln und Möbelkantenhölzern 2 können die Würfel 1' der Verbindungselemente 1 derart furniert werden, dass sie die Laufrichtungen der Maserung der einzelnen furnierten Seiten der an sie angrenzenden Möbelkantenhölzer 2 übernehmen, so dass auf jeder furnierten Seite eines jeden Würfels 1' ein Maserkreuz entsteht, das gegebenenfalls im Schnittpunkt der Furnierkanten durch eine Gewindebohrung 4 unterbrochen ist. In der Regel ist es nicht notwendig, die Stirnseiten der Möbelkantenhölzer 2 zu furnieren, insbesondere nicht, wenn diese aus Hartholz gefertigt sind. Bei Möbelkantenhölzern 2 mit Metall- oder Kunststoffkern ist es bei Holzmöbeln oder holz- oder holzähnlich furnierten Möbeln allerdings aus ästethischen Gründen empfehlenswert, auch die Stirnseiten der Möbelkantenhölzer 2 zu furnieren oder ihnen sonstwie einen holzähnlichen Aspekt zu verleihen.

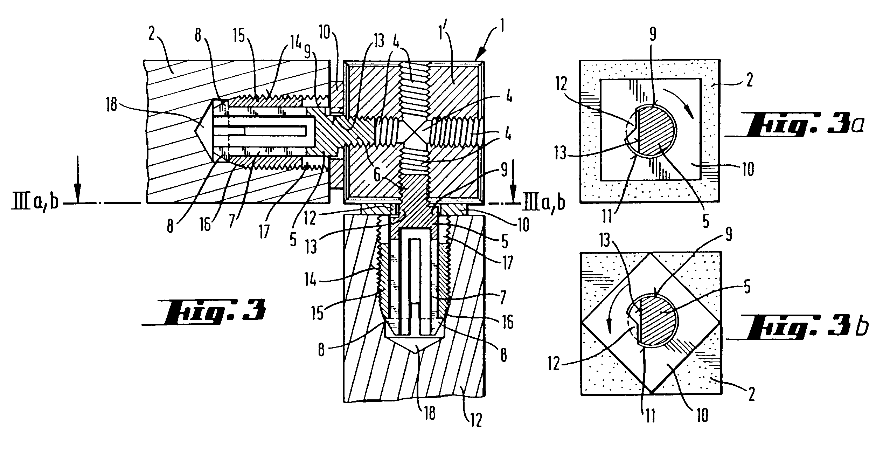

Fig. 3 veranschaulicht die erste Ausführungsvariante eines erfindungsgemässen Verbindungselementes 1 im Schnitt, das sichtbar mit zwei Möbelkantenhölzern 2 verbunden ist. Neben dem Würfel 1', der wie hier dargestellt beschichtet, resp. furniert sein kann, erkennt man pro mit dem Würfel 1' zu verbindenden Möbelkantenholz 2 einen Bolzen 5, der an einem seiner Enden als Gewindestift 6 und am anderen seiner Enden als Spannhülse 7 ausgebildet ist. Der Gewindestift 6 ist so dimensioniert und gestaltet, dass er sich in die Gewindebohrung 4 des Würfels 1' einschrauben lässt. Die Spannhülse 7 ihrerseits ist vorteilhafterweise kreuzweise geschlitzt und weist ein leicht konisches Ende auf, das aussen mit Widerhaken 8 versehen ist. Zwischen dem Gewindestift 6 und der Spannhülse 7 weist der Bolzen 5 einen zylindrischen Bereich 9 mit einseitiger Abflachung 13 auf, der so positioniert ist, dass er zwischen den Würfel 1' und das Möbelkantenholz 2 zu liegen kommt. Auf diesem Bereich 9 sitzt, zwischen dem Würfel 1' und dem Möbelkantenholz 2, eine vorteilhafterweise quadratische Zwischenscheibe 10 mit zentralem Loch 11, das über ca. 270° rund ist und auf seinem restlichen Umfang einen gegen das Zentrum des Loches 11 hin gerichteten Spickel 12 trägt, der derart mit der Abflachung 13 des zylindrischen Bereiches 9 des Bolzens 5 zusammenwirkt, dass die Zwischenscheibe um 45° auf dem Bolzen 5 verdrehbar ist, wie dies aus den Fig. 3a und 3b, die je eine Endlage der Drehbewegung der Zwischenscheibe 10 auf dem Bolzen 5 darstellen, ersichtlich ist.

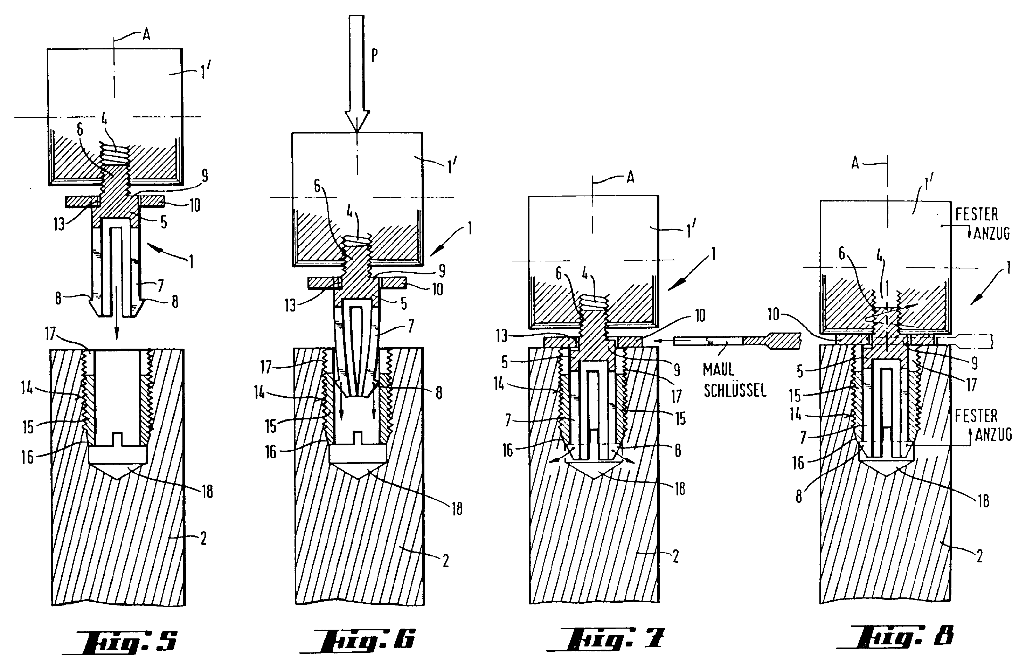

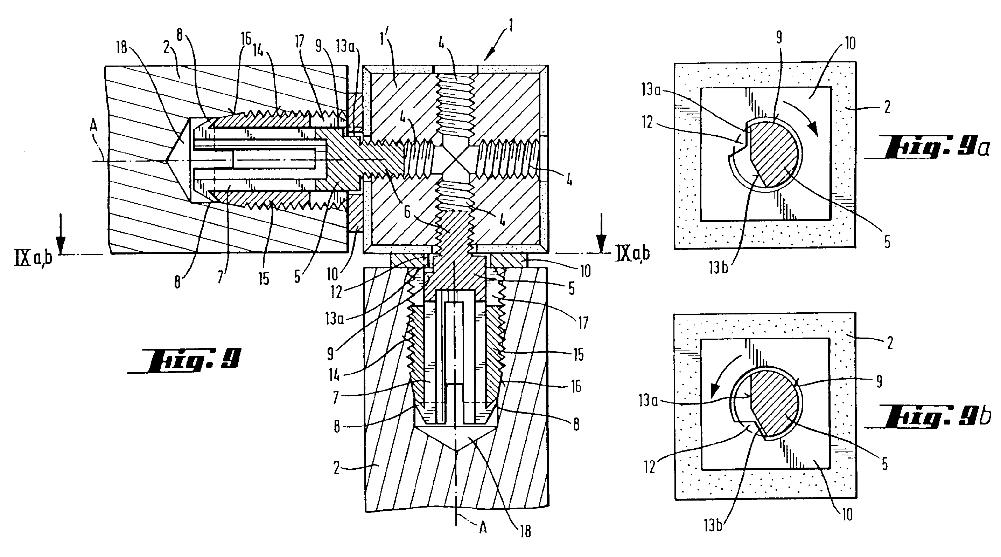

Von jeder Stirnseite eines jeden Möbelkantenholzes 2 her ist, vorteilhafterweise mittels eines Aussengewindes 14, eine Hülse 15 in eine zentrale Bohrung 18 eingelassen, derart, dass die Spannhülse 7 sich mit ihren Widerhaken 8 vor dem Herausziehen aus der Hülse 15 gesichert, einsetzen lässt. Die genaue Funktion und ein vorteilhaftes Vorgehen zum Zusammenbau des erfindungsgemässen Verbindungselementes 1 mit den damit zu verbindenden Möbelkantenhölzern 2, wird weiter unten anhand der Fig. 5 bis 8 beschrieben.

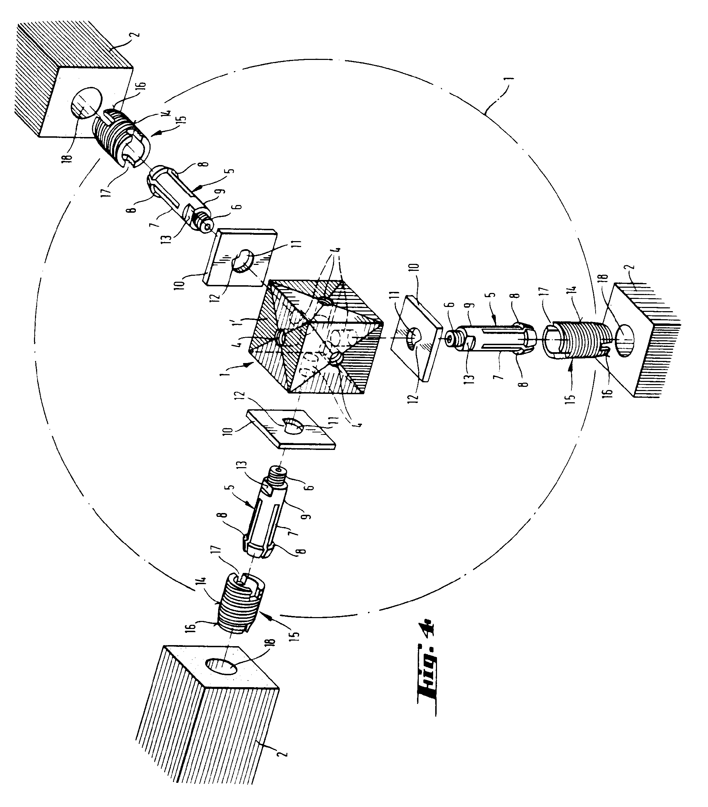

Fig. 4 illustriert die Ecke II, III des Möbels gemäss Fig. 1 in einer parallelperspektivischen Explosionszeichnung. Man erkennt, dass in dieser Ausführungsvariante das erfindungsgemässe Verbindungselement 1 für die dreiseitige Verbindung mit drei Möbelkantenhölzern 2 ausgelegt ist und demnach neben einem Würfel 1' drei Bolzen 5, drei Zwischenscheiben 10 und drei Hülsen 15 umfasst. In dieser perspektivischen Sicht der einzelnen Komponenten des erfindungsgemässen Verbindungselementes 1 erkennt man gut die maximal sechs im Würfel 1' vorhandenen Gewindebohrungen 4, die aussen quadratische Form der Zwischenscheiben 10 mit ihren über ca 270° zylindrisch verlaufenden zentralen Löchern 11, in die hinein die Spickel 12 ragen, sowie die Gewindestifte 6, und die kreuzweise geschlitzten Spannhülsen 7 der Bolzen 5 mit ihren mit Widerhaken 8 versehenen Enden. Ferner erkennt man, dass die Hülsen 15 vorteilhafterweise sowohl an ihren leicht konischen vorderen Enden 16 als auch an ihren hinteren Enden 17 geschlitzt sind, derart, dass ihre vorderen Enden 16, im Falle wo die Möbelkantenhölzer 2 aus Hartholz sind, beim Einschrauben der Hülsen 15 in die zentralen Bohrungen 18 der Möbelkantenhölzer 2 unter dem Druck des Schneidens des Gewindes in das Holz mittels des Aussengewindes 14, leicht gegen innen ausweichen können, resp. dass von hinten ein Schraubenzieher angesetzt werden kann, um die Hülsen 15 in das Möbelkantenholz 2 einzuschrauben und bei Bedarf zusammen mit dem eingesetzten Bolzen 5 mittels eines Spezialschraubenziehers wieder aus dem Möbelkantenholz 2 herauszuschrauben.

Es ist naheliegend, dass jeder Würfel 1' eines Verbindungselementes 1 je nach Bedarf mit zwischen ein bis sechs Möbelkantenhölzern 2 oder anderen Elementen, wie z.B. Möbelfüssen, verbindbar ist und demnach ein erfindungsgemässes Verbindungselement 1 einen Würfel 1' und bis zu sechs Bolzen 5, sechs Zwischenscheiben 10 und sechs Hülsen 15 aufweisen kann, je nachdem, wo und wie es im erfindungsgemässen Möbel zur Anwendung kommt.

Die Fig. 5 bis 8 illustrieren ein vorteilhaftes Vorgehen für das Verbinden eines Möbelkantenholzes 2 mit einem erfindungsgemässen Verbindungselement 1. Als erstes ist in das vorgängig stirnseitig mit der Bohrung 18 versehene Möbelkantenholz 2 die Hülse 15 mittels eines rückseitig in den dafür vorgesehenen Schlitz eingreifenden Schraubenziehers in das Möbelkantenholz 2 einzuschrauben. Alsdann ist der Bolzen 5 mit seinem als Spannhülse 7 ausgebildeten Ende durch die Hülse 15 hindurchzustossen, bis die Widerhaken 8 beim Austritt aus der Hülse 5 am vorderen Ende derselben einrasten. Während des Durchschiebens der Spannhülse 5 durch die Hülse 15 werden die durch die kreuzweise angeordneten Schlitze in der Spannhülse 5 entstehenden einzelnen Lamellen im Bereich der Widerhaken 8 gegeneinandergepresst, da die Widerhaken 8 an ihren Spitzen auf einem grösseren Durchmesser liegen, als der Innendurchmesser der Hülse 15 beträgt. Das Durchstossen der Spannhülse 5 mit ihren Widerhaken 8 durch die Hülse 5 erfordert daher eine gewisse Kraft P, die gegebenenfalls leichter angewendet werden kann, wenn der Bolzen 5 vorgängig partiell in einen Würfel 1' oder ein entsprechendes Hilfswerkzeug eingeschraubt wird. Das derart einseitig oder vorteilhafterweise direkt zweiseitig mit einem, resp. zwei Bolzen 5 versehene Möbelkantenholz 2 wird dann mit einem Gewindestift 6 an die Gewindebohrung 4 des definitiv mit dem Möbelkantenholz 2 zu verbindenden Würfels 1', der gegebenenfalls bereits mit einem oder mehreren Teilen des zu realisierenden Möbels verbunden sein kann und nicht mehr verdrehbar ist, herangeführt, worauf der Bolzen 5 mittels eines mit der vorgängig aufgeschobenen Zwischenscheibe 10 zusammenwirkenden Maulschlüssels in die Gewindebohrung 4 eingeschraubt wird. Das Drehen der Zwischenscheibe 10 um die Längsachse A der Gewindebohrung 4, resp. des Gewindestiftes 6 oder generell des Bolzens 5 bewirkt, wie anhand der Fig. 3a und 3b ersichtlich ist, ein entsprechendes Drehen und somit Ein- oder Ausschrauben des Bolzens 5 in, resp. aus der Gewindebohrung 4. Der Bolzen 5 wird vorteilhafterweise so fest in den Würfel 1' eingeschraubt, bis die Zwischenscheibe 10 zwischen der Stirnseite des Möbelkantenholzes 2 und dem Würfel 1' festgeklemmt ist und ein fester Anzug zwischen diesen Teilen sichergestellt ist. Die sich in diesem Zeitpunkt in einer beliebigen Drehstellung um die vorerwähnte Längsachse A befindliche Zwischenscheibe 10 kann nun dank der Abflachung 13 auf dem Bolzen 5 und dem Spickel 12 im Loch 11 um bis zu ca 45° zurückgedreht werden, derart, dass seine Seitenkanten mit jenen des Würfels 1′ und jenen des Möbelkantenholzes 2 fluchten, ohne dass der Bolzen 5 dadurch wieder ausgedreht würde. Das Festziehen des Bolzens 5, resp. dessen Gewindestiftes 6 in der Gewindebohrung 4 des Würfels 1′ braucht daher nicht genauer zu erfolgen als auf ungefähr 45°.

Entsprechend wird das andere Ende des Möbelkantenholzes 2 mit einem darin verankerten Bolzen 5 mit einem zweiten Würfel 1′ verschraubt und die Zwischenscheibe 10 ausgerichtet. Anschliessend werden, wo nötig, weitere Möbelkantenhölzer 2 mit den Würfeln 1′ verschraubt, derart, dass zumindest ein Teil des Möbelskelettes oder einzelner Möbelgrundwürfelskelette entstehen. Dabei ist darauf zu achten, dass eventuell einzusetzende Flächenteile 3 (Fig. 1 und 3), die mittels Federn in Nuten der Möbelkantenhölzer 2 oder mittels Stiften in entsprechende Bohrungen in den Möbelkantenhölzern 2, oder in anderer adäquater Art und Weise zwischen die Möbelkantenhölzer 2 und Würfel 1′ einsetzbar sind, rechtzeitig eingesetzt werden, jedenfalls bevor jeweils das vierte ein Flächenteil 3 abschliessende Möbelkantenholz 2 zwischen die entsprechenden Würfel 1′ des Möbelteiles eingesetzt wird, ansonsten ein Einlegen des Flächenteiles 3 nicht mehr möglich ist oder zumindest nicht mehr mit den gegen es gerichteten Kanten der Möbelkantenhölzer 2 verbindbar ist.

In den Fig. 9, 9a und 9b ist eine zweite vorteilhafte Ausführungsvariante des erfindungsgemässen Verbindungselementes 1, mit zwei Möbelkantenhölzern 2 zusammengebaut, dargestellt. Diese Ausführungsvariante des erfindungsgemässen Verbindungselementes 1 für Möbel unterscheidet sich von der ersten, hiervor insbesondere anhand der Fig. 3, 3a und 3b sowie 4 im Detail erläuterten ersten Ausführungsvariante dadurch, dass der Bolzen 5 in seinem im wesentlichen zylindrischen Bereich 9 zwei aneinander anschliessende Abflachungen 13a und 13b aufweist, derart, dass die Zwischenscheibe 10 ohne Verdrehen des Bolzens 5 um ungefähr 90° um die Längsachse A des Bolzens 5 gedreht werden kann. Dies ermöglicht es, völlig unabhängig von der Schluss-Drehlage der Zwischenscheibe 10 den Bolzen 5, resp. dessen Gewindestift 6 in den Würfel 1′ einzuschrauben, da die Zwischenscheibe 10 aus jeder Endschraublage heraus ohne Losschrauben oder Nachziehen des Bolzens 5 in die gewünschte, weiter oben beschriebene flankenparallele Stellung zurückgedreht werden kann.

Diese zweite Ausführungsvariante des erfindungsgemässen Verbindungselementes 1 unterscheidet sich weiter dadurch von der hiervor beschriebenen ersten Ausführungsvariante, als dass die Widerhaken 8 am Ende der Spannhülse 7 sich nicht rechtwinklig von der Spannhülse 7 abheben, sondern als effektive Haken ausgebildet sind und vorteilhafterweise das vordere Ende 16 der Hülse 15 entsprechend konischer gestaltet ist, derart, dass

eine festere Verankerung zwischen Bolzen 5 und Hülse 15 entsteht, als bei der ersten Ausführungsvariante. Dies ist insbesondere dann wertvoll, wenn grosse oder schwere, resp. schwer belastbare Möbel realisiert werden sollen, bei denen sonst ein ungewolltes Herausgleiten der Spannhülsen 7 aus den in die Möbelkantenhölzer 2 eingelassenen Hülsen 15 auftreten könnte. Selbstverständlich sind die beiden hiervor beschriebenen Detailänderungen an der Konstruktion des Bolzens 5 und der Hülse 15 unabhängig voneinander einsetzbar.

Der Fachmann erkennt, dass weitere Detailänderungen an den einzelnen Komponenten des erfindungsgemässen Verbindungselementes vorgenommen werden können, sofern eine spezielle Anwendung dieser Elemente dies notwendig macht. Dadurch wird allerdings der dieser Erfindung zugrundeliegende Erfindungsgedanke nicht verlassen. Beispielsweise sei hier erwähnt, dass die Aussenabmessungen der Zwischenscheiben 10 im Verhältnis zu den Abmessungen der Möbelkantenhölzern 2 anders gewählt werden können als in der Zeichnung dargestellt, derart, dass rund um die Würfel 1′ tiefere Schattenfugen entstehen. Weiter ist es, für den Bau besonderer Möbel, möglich, einzelne oder alle Möbelkantenhölzer 2 einteilig mit den für das Möbel notwendigen Flächenteilen 3 auszuführen, wobei dies allerdings zu ästethisch anders präsentierenden Möbeln führt, insbesondere, da zumindest einzelne Hülsen 15 in diesem Falle seitlich in die Flächenteile 3, resp. Möbelkantenhölzer 2 eingelassen werden müssen. Es ist auch naheliegend die erfindungsgemässen Verbindungselemente anders einzusetzen als für den Zusammenbau von zerstörungsfrei demontierbaren Möbeln, denn sie eignen sich auch als Befestigungspunkte an Wänden, mit denen sich beliebige Konstruktionen verbinden lassen. In wesentlich grösser dimensionierten Ausführungsvarianten lassen sich die erfindungsgemässen Verbindungselemente auch in Fachwerkkonstruktionen der Mechanik anwenden. Weitere Anwendungsgebiete sind denkbar, genauso wie darauf abgestimmte Konstruktionen der einzelnen Komponenten der erfindungsgemässen Verbindungselemente.

Der Fachmann erkennt, dass das erfindungsgemässe Verbindungselement für den Aufbau von Möbeln, insbesondere von zerstörungsfrei wieder zerlegbaren Holz- oder Holzimitationsmöbeln wesentliche Vorteile aufweist, die insbesondere in der einfachen und sicheren Anwendung sowie der ästethisch ansprechenden Präsentation liegen. Das erfindungsgemässe Verbindungselement ist dabei ausserordentlich flexibel in seinen Einsatzmöglichkeiten und eröffnet dem Möbelfabrikanten viele neue Aspekte.

**Patentansprüche**

1. Verbindungselement (1) für den Aufbau von Möbeln, enthaltend ein zentrales mit ein oder mehreren Gewindebohrungen (4) versehenes Montageteil (1') in From eines Würfels (1') und zumindest ein in ein Möbelteil (2) einsetzbares Halteteil (15) in Form einer Hülse (15) sowie zumindest ein in eine der Gewindebohrungen (4) einschraubbares Verbindungsteil (5), das dazu dient, den Montageteil (1') mit dem im Möbelteil (2) eingesetzten Halteteil (15) zu verbinden, und welcher Verbindungsteil ein Bolzen ist der zwischen seinen Enden einen im wesentlichen zylindrischen Bereich (9) aufweist und an einem seiner Euden einen Gewindestift (6) hat dadurch gekennzeichnet, dass das Verbindungsteil am dem Gewindestift (6) gegenüberliegenden Ende eine Spannhülse (7) hat und dass der zylindrische Bereich (9) des Bolzens (5) mit zumindest einer Abflachung (13) versehen ist, die mit einer Zwischenscheibe (10), die ein zentrales Loch (11) mit einem partiell in dieses hineinragenden Spickel (12) aufweist, derart zusammenwirkt, dass der Spickel (12) mit der Abflachung (13) in Wirkverbindung Bringbar ist.

2. Verbindungselement (1) gemäss Anspruch 1, dadurch gekennzeichnet, dass die Zwischenscheibe (10) um ungefähr 45° auf dem mit zumindest einer Abflachung (13) versehenen im wesentlichen zylindrischen Bereich (9) des Bolzens (5) verdrehbar ist.

3. Verbindungselement (1) gemäss den Ansprüchen 1 und 2, dadurch gekennzeichnet, dass der Bolzen (5) auf seinem im wesentlichen zylindrischen Bereich (9) zwei aneinander anschliessende Abflachungen (13a, 13b) aufweist, derart, dass die Zwischenscheibe (10) um ungefähr 90° auf dem Bolzen (5) verdrehbar ist.

4. Verbindungselement (1) gemäss Anspruch 1, dadurch gekennzeichnet, dass die Spannhülse (7) an ihrem vorderen Ende Widerhaken (8) aufweist, die mit dem vorderen Ende (16) der Hülse (15) in Wirkverbindung bringbar sind.

5. Unter Verwendung von Verbindungselementen gemäss Anspruch 1 realisiertes Möbel, dadurch gekennzeichnet, dass es zumindest zwischen den Würfeln (1') der Verbindungselemente (1) und den daran anschliessenden Möbelteilen (2) Schattenfugen aufweist, die durch die Zwischenscheiben (10) gebildet werden.

6. Möbel gemäss Anspruch 5, dadurch gekennzeichnet, dass die Möbelteile Möbelkantenhölzer (2) sind, mit denen die Flächenteile (3) des Möbels verbunden sind.

7. Möbel gemäss Anspruch 5, dadurch gekennzeichnet, dass die Möbelkantenhölzer (2) aus furniertem Hartholz und die Würfel (1') aus furniertem Metall gefertigt sind, wobei die Furnierlinien der einzelnen Möbelteile aufeinander abgestimmt sind.

**Claims**

1. A connecting element (1) for the assembly of furniture, containing a central assembly part (1') in the form of a cube (1') provided with one or several tapholes (4) and at least one retaining part (15) in the form of a sleeve (15), which can be inserted in a furniture part (2), and also at least one connecting part (5), which can be screwed into one of the tapholes and which is used to connect the assembly part (1') with the retaining part (15) inserted in the furniture part (2), and which connecting part is a pin, which between its ends has a substantially cylindrical region (9) and a set screw (6) at one of its ends, **characterised in that** the connecting part has a clamping sleeve (7) at its end opposite the set screw (6) **and in that** the cylindrical region (9) of the pin (5) is provided with at least one flat area (13), which interacts with a washer (10), which has a central hole (11) with a part (12) partially projecting into it, so that the inwardly protruding part (12) can be brought into effective connection with the flat area (13).

2. A connecting element (1) according to Claim 1, **characterised in that** the washer (10) can be rotated by roughly 45° on the substantially cylindrical region (9) of the pin (5) provided with at least one flat area (13).

3. A connecting element (1) according to Claims 1 and 2, **characterised in that** the pin (5) has two interconnecting flat areas (13a, 13b) on its substantially cylindrical region (9) so that the washer (10) can be rotated by roughly 90° on the pin (5).

4. A connecting element according to Claim 1, **characterised in that** at its front end the clamping sleeve (7) has barbs (8) which can be brought into effective connection with the front end (16) of the sleeve (15).

5. A piece of furniture made by using connecting elements according to Claim 1, **characterised in that** at least between the cubes (1') of connecting elements (1) and the furniture parts (2) connected thereto it has gaps which are formed by the washers (10).

6. A piece of furniture according to Claim 5, **characterised in that** the furniture parts are edge timbers (2) with which the flat parts (3) of the furniture are connected.

7. A piece of furniture according to Claim 5, characterised in that the furniture edge timbers (2) are manufactured from veneered hardwood and the cubes (1') are manufactured from veneered metal, with the veneer lines of the individual furniture parts being coordinated.

**Revendications**

1. Elément (1) de fixation pour le montage de meubles, comprenant une pièce de montage (1') centrale munie d'un ou plusieurs trous filetés (4) en forme de cube (1') et au moins une pièce de maintien (15) insérable dans une pièce de meuble (2) sous forme de douille (15), ainsi qu'au moins une pièce de raccordement (5) vissable dans l'un des trous filetés (4), qui sert à relier la pièce de montage (1') à la pièce de maintien (15) insérée dans la pièce de meuble (2) et dont la pièce de raccordement est un goujon qui présente entre ses extrémités, un domaine (9) essentiellement cylindrique et a une tige filetée (6) à une de ses extrémités, caractérisé en ce que la pièce de raccordement (5) a une douille de serrage (7) à l'extrémité opposée à la tige filetée (6), et qu'on munit le domaine (9) cylindrique du goujon (5) d'au moins un méplat (13), qui coopère avec une rondelle intermédiaire (10) qui présente un trou central (11) avec un ergot (12) qui y pénètre partiellement, de telle sorte que l'ergot (12) coopère avec le méplat (13).

2. Elément de fixation (1) selon la revendication 1, caractérisé en ce qu'on peut faire tourner d'environ 45° la rondelle intermédiaire (10) sur la partie (9) cylindrique du goujon (5) munie d'un méplat (13).

3. Elément de fixation (1) selon les revendications 1 et 2, caractérisé en ce que le goujon (5) présente sur sa partie (9) essentiellement cylindrique, deux méplats (13a, 13b) qui se raccordent, de sorte qu'on peut faire tourner la rondelle intermédiaire (10) d'environ 90° sur le goujon (5).

4. Elément de fixation (1) selon la revendication 1, caractérisé en ce que la douille de serrage (7) présente à son extrémité antérieure, des barbes (8) qu'on fait coopérer avec l'extrémité antérieure (16) de la douille (15).

5. Meuble réalisé à l'aide d'éléments de fixation selon la revendication 1, caractérisé en ce qu'il y a au moins entre les cubes (1') des éléments de fixation (1) et les pièces de meuble (2) qui s'y raccordent, des jeux remplis par les rondelles intermédiaires (10).

6. Meuble selon la revendication 5, caractérisé en ce que les pièces de meuble (2) sont des arêtes auxquelles on relie les pièces planes (3) du meuble.

7. Meuble selon la revendication 5, caractérisé en ce que les arêtes (2) sont en bois dur plaqué et que les cubes (1') sont en métal plaqué, les bords de placage des différentes pièces de meuble étant en correspondance.

*Fig. 1*

Fig. 2

Fig. 3a

Fig. 3b

Fig. 3

Fig. 4.

**Fig. 8**

**Fig. 7**

**Fig. 6**

**Fig. 5**

Fig. 9a

Fig. 9b

Fig. 9